Europäisches Patentamt

European Patent Office

Office européen des brevets

(11) Publication number: **0 459 427 A2**

# EUROPEAN PATENT APPLICATION

(21) Application number: 91108744.3

(51) Int. Cl.5: **G06F 1/16**

(22) Date of filing: 28.05.91

(30) Priority: 31.05.90 JP 143045/90

(43) Date of publication of application:
04.12.91 Bulletin 91/49

(84) Designated Contracting States:
DE FR GB

(71) Applicant: **SHARP KABUSHIKI KAISHA**
22-22 Nagaike-cho Abeno-ku
Osaka 545(JP)

(72) Inventor: **Maekawa, Akira**
Mikasa-Ryo, 492, Minosho-cho
Yamato-Koriyama-shi, Nara-ken(JP)
Inventor: **Tatsumi, Hidenori**
303 Haitsu-Hiranuma, 1-5-21, Shijo-Oji
Nara-shi, Nara-ken(JP)
Inventor: **Suzuki, Kouzi**
Mikasa-Ryo, 492, Minosho-cho
Yamato-Koriyama-shi, Nara-ken(JP)

(74) Representative: **TER MEER - MÜLLER - STEINMEISTER & PARTNER**
Mauerkircherstrasse 45
W-8000 München 80(DE)

(54) Portable computer with peripheral units for extended funtionality.

(57) A portable computer constituted by a main body (1) having data processing functions and a removable floppy disk unit (3), the main body (1) being formed of a display panel unit (100) and a base unit (105) on which a key board (102) is disposed, the display panel unit (100) being rotatably connected to the base unit (105) so that the display panel unit (100) covers the key board when the portable computer is not in use. The main body (1) has a power supply backed up with a chargeable battery, a hard disk, and a first expansion connector (4). The floppy disk unit (3) has a second expansion connector (6). Data transmission between the main body (1) and the floppy disk unit (3) is possible by directly connecting the first expansion connector (4) with the second expansion connector (6).

*Fig. 3*

## BACKGROUND OF THE INVENTION

1. Field of the Invention:

The present invention relates to a portable computer whose functions can be expanded by connecting removable peripheral units.

2. Description of the Related Art:

As a computer whose functions can be expanded by connecting removable peripheral units thereto, there is known a relatively small desktop-type computer which consists of a computer main body including a CPU, a system control section, memory, an I/O control section, a display section, a hard disk, a floppy disk holding section, a floppy disk interface, and an expansion connector for connecting expansion units, and of an expansion unit which can be connected to the computer main body via the expansion connector and which has expansion slots to which expansion boards are inserted. The installation of expansion boards in the expansion slots enables various functions which are not included in the main body 1 to be provided. However, such a desktop-type computer has problems in that, because it has a hard disk and floppy disk holding section built therein, it is heavy, large, and is difficult to carry. In order to enhance portability, there is available other desktop-type computer in which a hard disk is removed from the computer main body. In such a case, however, because a hard disk is not contained in the computer, it is difficult to execute application programs which require a memory with a large capacity.

## SUMMARY OF THE INVENTION

It is accordingly an object of the present invention to provide a computer which can be formed into an A4 size so that it can be put in an attache case, can operate without an external AC power supply, can execute application programs which require a memory with a large capacity, and can be operated at any indoor or outdoor location.

The above-mentioned objects of the present invention can be achieved by a portable computer comprising a main body having data processing functions and a removable floppy disk unit, said main body being formed of a display panel unit and a base unit on which a key board is disposed, said display panel unit being rotatably connected to said base unit so that said display panel unit covers said key board when said portable computer is not in use, wherein said main body has a power supply backed up with a chargeable battery, a hard disk, and a first expansion connector, and said floppy disk unit has a second expansion connector, data transmission between said main body and said floppy disk unit being possible by directly connecting said first expansion connector with said second expansion connector.

The above-mentioned objects of the present invention can also be achieved by a portable computer comprising a main body having data processing functions, removable floppy disk unit, and a removable expansion board unit for expanding functions of said main body, said main body being formed of a display panel unit and a base unit on which a key board is disposed, said display panel unit being rotatably connected to said base unit so that said display panel unit covers said key board when said portable computer is not in use, wherein said main body has a power supply backed up with a chargeable battery, hard disk, and a first expansion connector, said floppy disk unit has a second expansion connector, and said expansion board unit has a third expansion connector, data transmission between said main body and said floppy disk unit being possible by directly connecting said first expansion connector with said second expansion connector, data transmission between said main body and said expansion board unit being possible by directly connecting said first expansion connector with said third expansion connector.

The portable computer of the present invention has a built-in hard disk and does not have a floppy disk holding section or a floppy disk interface. Therefore, it is light in weight and small in size and is very easy to carry. In addition, in a case where a floppy disk unit is connected to the computer main body, application programs which require a memory with a large capacity can be executed.

Also, in a case where an expansion board is connected to the computer main body, the functions of the main body can be expanded, and accordingly it is possible for the computer to have functions equivalent to those of a desktop-type computer. Since the main body, the floppy disk unit, and an expansion board do not overlap in construction each other, a user will experience no disadvantages by making a double-investment.

Further objects and advantages of the present invention will be apparent from the following description, reference being had to the accompanying drawings wherein preferred embodiments of the present invention are clearly shown.

## BRIEF DESCRIPTION OF THE DRAWINGS

Fig. 1A is a block diagram of a portable computer main body of an embodiment of the present invention;

Fig. 1B is a block diagram of an expansion slot unit of the embodiment of the present invention;

Fig. 1C is a block diagram of a floppy disk unit of the embodiment of the present invention;

Fig. 2A is a block diagram showing a state in which the expansion slot unit of Fig. 1B and the floppy disk unit of Fig. 1c are connected to the main body of Fig. 1a;

Fig. 2B is a block diagram showing a state in which the floppy disk unit of Fig. 1C is connected to the main body of Fig. 1A;

Fig. 3 is a perspective view of the computer main body of Fig. 1A;

Fig. 4 is a perspective view showing the procedure of connecting the main body of Fig. 1A to the floppy disk unit of Fig. 1C;

Fig. 5 is a rear view of the main body of Fig. 1A;

Fig. 6 is a perspective view showing the procedure of connecting the main body of Fig. 1A to the expansion slot unit of Fig. 1B which is connected with the floppy disk unit of Fig. 1C;

Fig. 7 is a flowchart showing the operation at the time of start up of the computer of the embodiment;

Fig. 8 is a perspective view showing the procedure of connecting the computer main body to the expansion unit in a modification of the embodiment.

## DESCRIPTION OF THE PREFERRED EMBODIMENTS

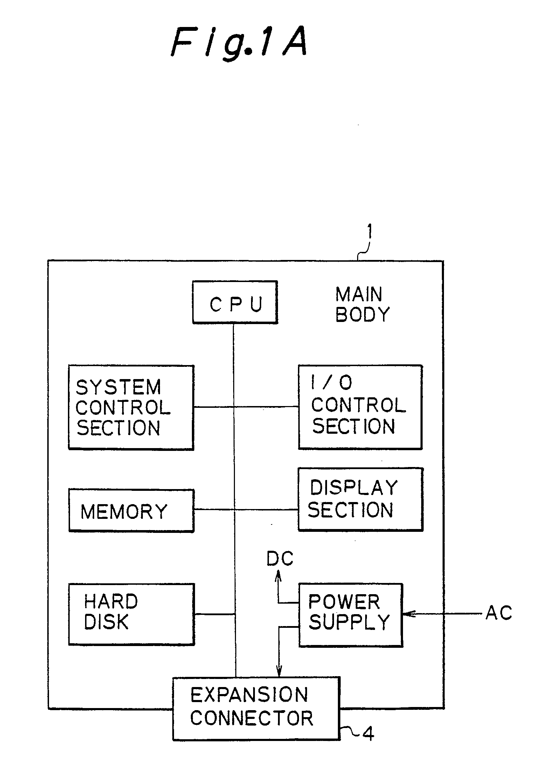

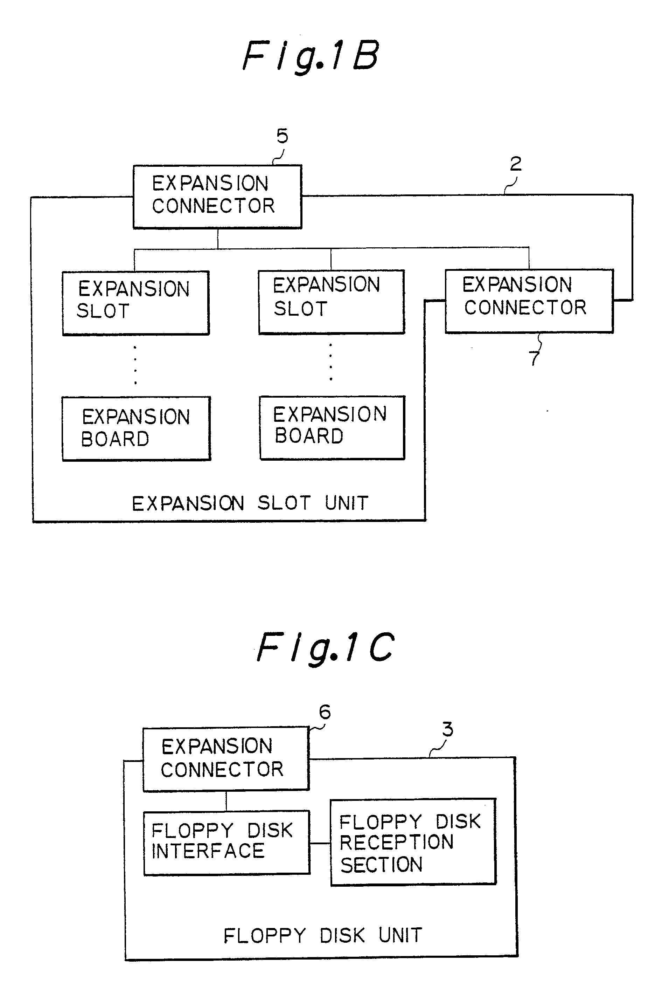

Fig. 1A is a block diagram showing the construction of a portable computer main body of an embodiment of the present invention. Fig. 1B is a block diagram showing the construction of an expansion slot unit. Fig. 1C is a block diagram showing the construction of a floppy disk unit. As shown in these figures, a main body 1 includes a CPU, a system control section for controlling the entire system, memory, an I/O control section for performing serial or parallel input/output operations, a display section formed of an LCD panel, a hard disk in which a large amount of data can be stored, an AC power supply which is backed up by a chargeable battery, and an expansion connector 4 for connection with an expansion unit.

The system control section includes a ROM in which fixed information, such as system programs, character fonts or the like, are stored, a memory control circuit, a timing generation circuit, etc. The I/O control section includes I/O ports, a keyboard control circuit, and so forth. The memory includes RAMs forming work areas for various kinds of registers, counters and so on, program areas, and data areas. The hard disk section includes a 20M-byte hard disk and a controller. The above respective sections are connected to a common bus line and controlled by the CPU.

The main body 1 is driven by an AC power supply when it is used indoors where an AC receptacle is available. In a case where it is used outdoors or indoors where an AC receptacle is not available, it is driven by a battery contained in the main body 1.

The expansion slot unit 2 includes expansion slots to which expansion boards are inserted, an expansion connector 5 for connection with the main body 1, and an expansion connector 7 for connection with the floppy disk unit 3. The installation of expansion boards in the expansion slots enables functions which are not included in the main body 1 to be executed. Available as an expansion board are a control board for controlling a CRT display device connected to the main body 1, modems, additional memories, etc.

The floppy disk unit 3 includes a floppy disk holding section, a floppy disk interface for connecting the floppy disk holding section to an expansion bus, and an expansion connector 6 for connection with the main body 1 and the expansion slot unit 2. It is so arranged that the expansion connector 6 of the expansion slot unit 3 are directly connected to the expansion connector 5 of the floppy disk unit 2 and the expansion connector 4 of the main body 1 without using any cable.

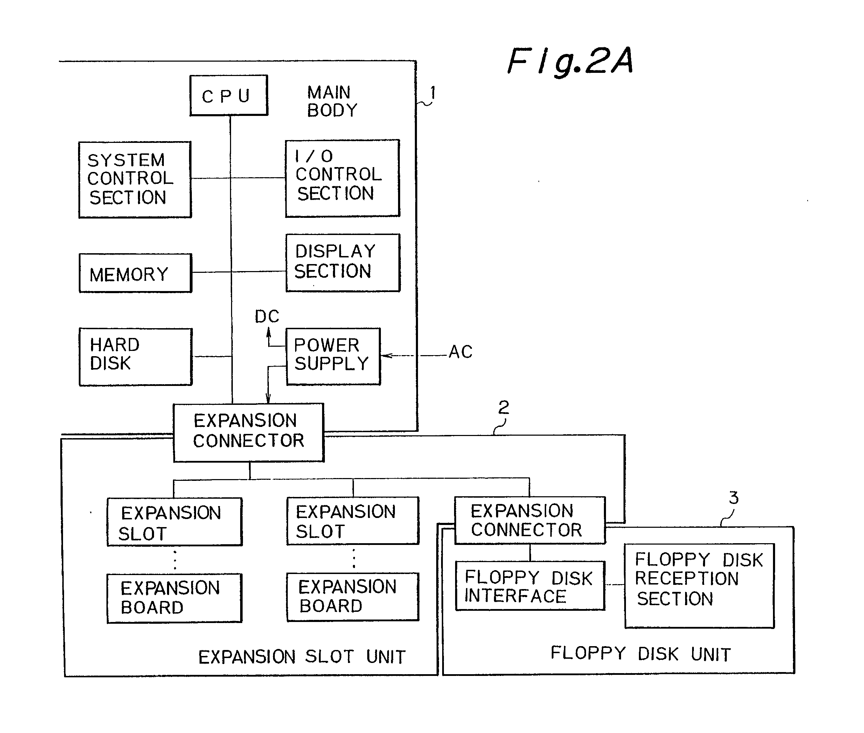

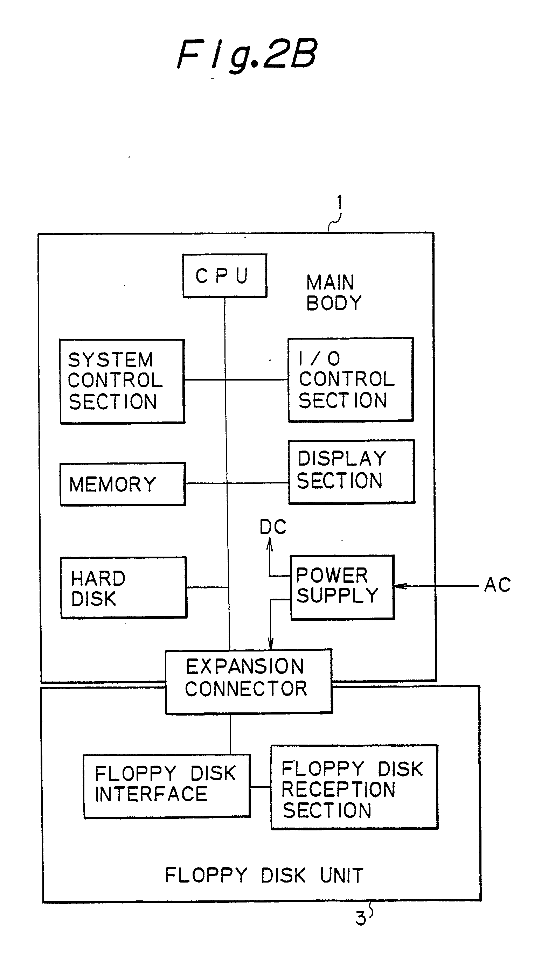

Fig. 2A shows a state in which the expansion slot unit 2 and the floppy disk unit 3 are connected to the main body 1. Fig. 2B shows a state in which only the floppy disk unit 3 is connected to the main body 1.

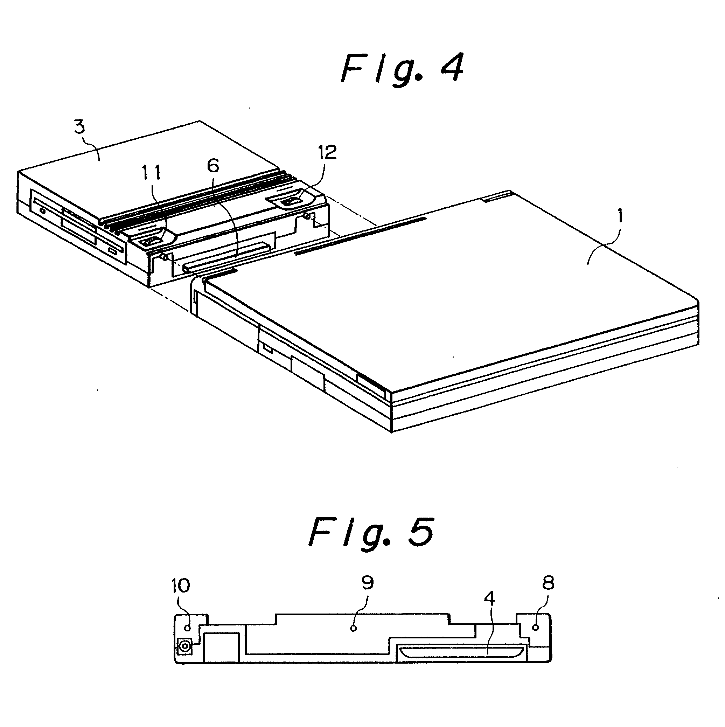

Fig. 4 is a perspective view showing the procedure of connection of the main body 1 to the floppy disk unit 3, and Fig. 5 is a rear view of the main body 1.

To connect the floppy disk unit 3 with the main body 1, the expansion connector 4 disposed at the rear of the main body 1 is connected with the expansion connector 6 of the floppy disk unit 3, and then hand screws 11, 12 disposed at the front of the floppy disk unit 3 are engaged with screw holes 8, 9 formed on the rear surface of the main body 1.

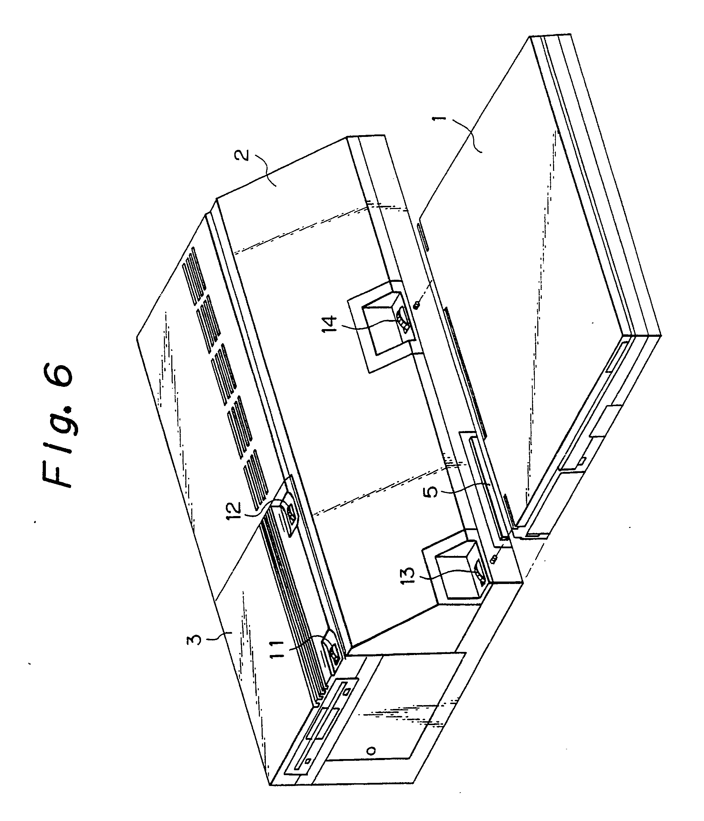

Fig. 6 is a perspective view showing the procedure of connection of the main body 1 to the expansion slot unit 2 which is connected with the floppy disk unit 3.

To connect the expansion slot unit 2 with the main body 1, the expansion connector 5 disposed at the front of the expansion slot unit 2 is connected with the expansion connector 4 of the main body 1, and then, hand screws 13, 14 disposed at the front of the expansion slot unit 2 are engaged with screw holes 8, 9 formed on the rear surface of the main body 1.

The floppy disk unit 3 is connected to the expansion slot unit 2 in a manner similar to the above-described procedure.

In the state shown in Fig. 2B, the floppy disk unit 3 is driven by the DC power supplied from the main body 1. On the other hand, the expansion slot unit 2 has an AC power supply (not shown) and DC power is supplied to the expansion board from the AC power supply. Therefore, DC power from the main body 1 is not supplied to the expansion slot unit 2 in the state shown in Fig. 2A. Whereby the consumption of DC power from the main body 1 can be reduced. There is not fear that such construction will lower the operability because the expansion slot unit needs not to be carried around. In the state shown in Fig. 2A, DC power is supplied to the floppy disk unit 3 not from the main body 1 but from the expansion slot unit 2.

A single grounded terminal for detecting that the expansion slot unit 2 is connected to the main body 1 is provided in the expansion connector 5 of the expansion slot unit 2. A single terminal which is pulled up to a predetermined electrical potential in correspondence with the above grounded terminal is provided in the expansion connector 4 of the main body 1. Whether an expansion slot unit 2 is connected to the main body 1 can be determined by monitoring the electrical potential of the terminal of the main body 1. As a result, in a case where a CRT display device is connected to the main body 1, the display section of the main body 1 is automatically nullified and the CRT display device is activated. Also, when an application program stored in an expansion board is executed, a runaway of the program can be prevented.

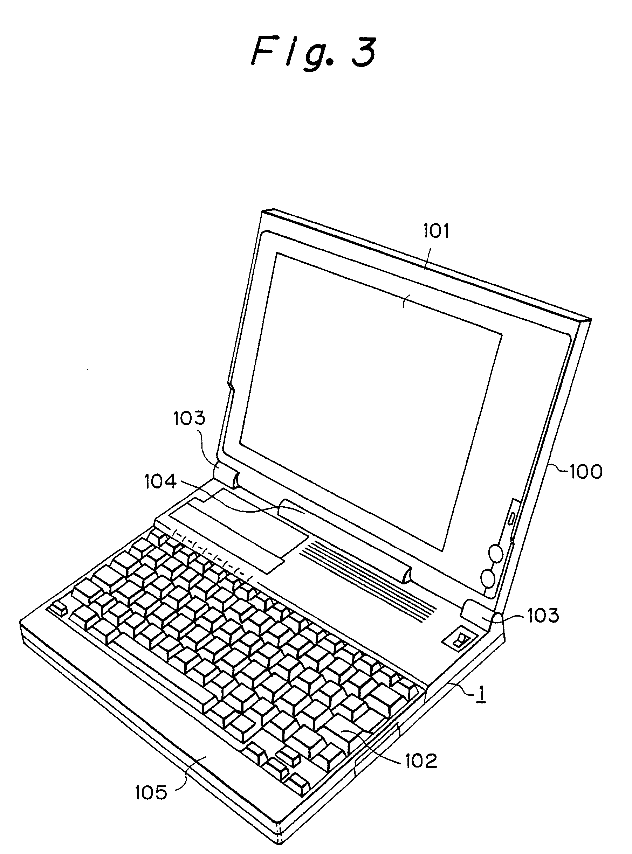

Fig. 3 is a perspective view of the computer main body 1. The main body 1 has a dimension of A4 size and a thickness of 30 mm, so it can be put in an attache case. The main body 1 comprises a panel unit 100 in which a liquid crystal device 101 and driving circuits thereof are housed, and a base unit 105 on the surface of which a keyboard 102 is disposed and in the inside of which a CPU, a system control section, memory, I/O units, a hard disk, and the like are housed. The panel unit 100 and the base unit 105 are rotatably linked at their rear ends with each other by hinges 103 and 104. A through section 104 for storing signal cables for connecting units 100 and 105 is provided between the hinges 103 and 104. The panel unit 100 covers the keyboard 102 completely when the portable computer is not in use and is locked to the base unit by a locking mechanism (not shown). When the portable computer is in use, the panel unit 100 can be fixed at any angle by hinges 103 and 104.

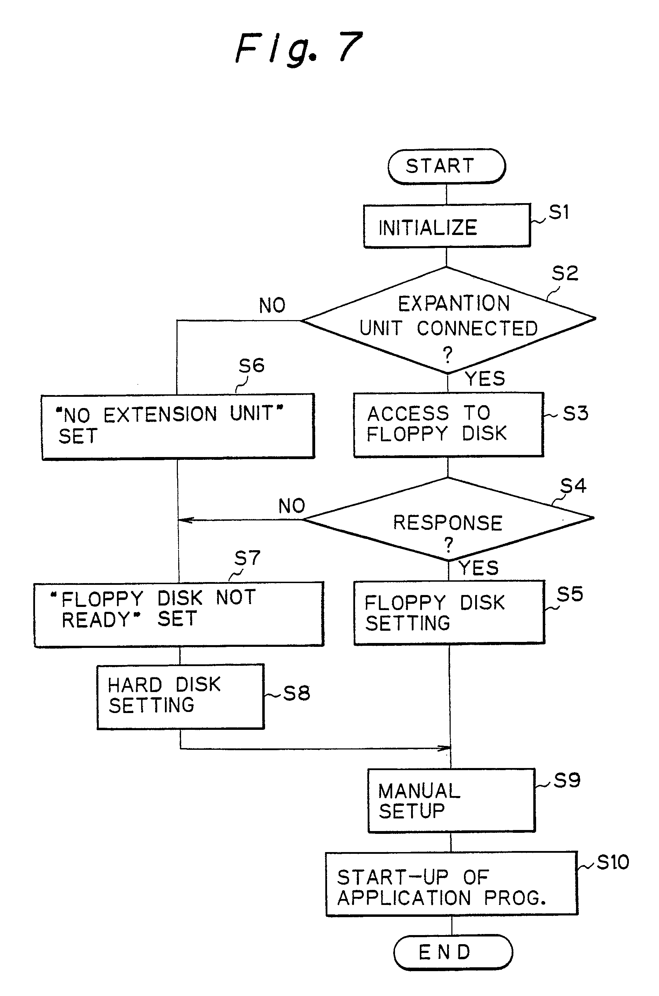

Next, referring to a flowchart of Fig. 7, a description will be provided of start-up operation of the portable computer. When a power switch of the main body 1 is turned on in step S1, the main body 1 is initialized, that is, initial values are set in respective circuits, and the operating system (OS) is made active. The output of the detection terminal of the expansion connector is read in step S2 and it is checked whether or not the expansion slot unit is connected to the main body 1. In this instance, if the output of the detection terminal is "0", it is determined that the expansion slot unit is connected to the main body 1; if it is "1", it is determined that the expansion slot unit is not connected to the main body 1. In the case where the expansion slot unit is not connected to the main body 1, the process proceeds to step S6 where "NO EXPANSION UNIT" flag is set in a RAM. And in step S7, "FLOPPY DISK NOT READY" flag is set in the RAM. As a result, "FLOPPY DISK NOT READY" is displayed when an access to a floppy disk is made in subsequent operations. Next, in step S8, the main body 1 is set to a state to read a program from the built-in hard disk, and an application program is read into the RAM from the hard disk. The application program is started by manually performing required operations in step S9.

When it is determined that the expansion slot unit is connected to the main body 1 in the above-mentioned step S2, the process proceeds to step S3 where the main body 1 accesses the floppy disk unit 3 to determine whether or not the floppy disk unit 3 is connected to the main body 1. To be specific, the main body 1 supplies a seek command for making a floppy disk controller incorporated in the floppy disk holding section output information indicating the number of tracks of a floppy disk. In step S4, it is determined whether or not there is a response from the floppy disk unit 3. When there is no response, i.e., the floppy disk unit 3 is not connected to the main body 1, or when a floppy disk is not inserted into the floppy disk unit 3, though the floppy disk unit 3 is connected to the main body 1, an application program is read from the hard disk and executed by the operations of the above-mentioned steps S7, S8, S9, and S10. When there is a response from the floppy disk unit 3, the main body 1 is set to a state to read program from a floppy disk, and an application program is read into the RAM from the floppy disk in step S5. Thereafter, by manually performing required operations in step S9, the application program is started in step S10.

When the floppy disk unit 3 is connected to the main body 1, it becomes possible to access the hard disk as in a conventional desktop-type computer by entering a predetermined command.

It is possible to automatically determine the presence or absence of a expansion board, such as a CRT display controller, a modem, an additional memory or the like, by the same process as that described above.

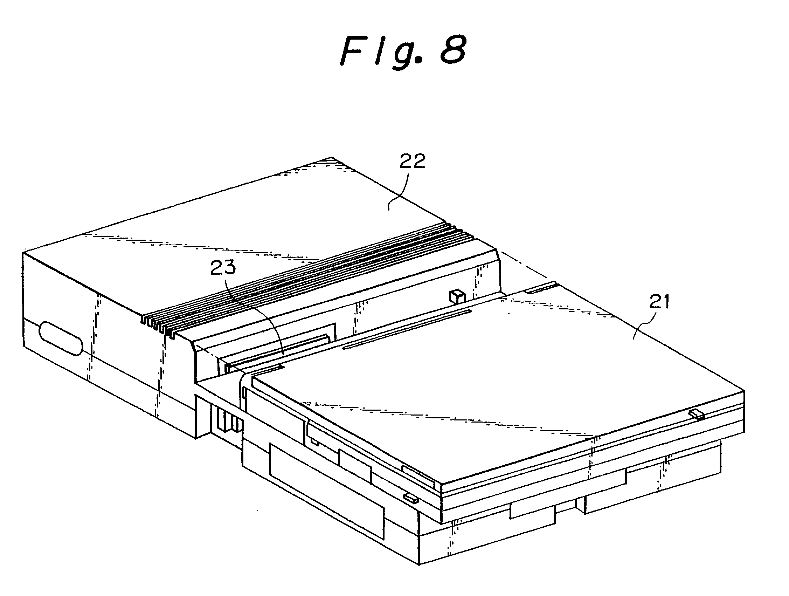

Next, a modification of the above-described embodiment will be explained with reference to Fig. 8. In Fig. 8, reference numeral 21 denotes a main body of a portable computer which is substantially the same as the main body 1 of the above-described embodiment. Reference numeral 22 denotes an expansion unit which can be connected to the main body 21 which is integrally formed of the expansion slot unit 2 and the floppy disk unit 3 of the above-described embodiment. To connect the expansion unit 22 to the main body 21, the main body 21 is put on the expansion unit 22, and an expansion connector of the main body 21 and an expansion connector 23 of the expansion unit 22 are directly connected without using any signal cable. Unlike the above-described embodiment, hand screws for fixation are not used.

Many different embodiments of the present invention may be constructed without departing from the spirit and scope of the present invention. It should be understood that the present invention is not limited to the specific embodiments described in this specification, except as defined in the appended claims.

## Claims

1. A portable computer comprising a main body (1) having data processing functions and a removable floppy disk unit (3), said main body (1) being formed of a display panel unit (100) and a base unit (105) on which a key board (102) is disposed, said display panel unit (100) being rotatably connected to said base unit (105) so that said display panel unit (100) covers said key board (102) when said portable computer is not in use, wherein said main body (1) has a power supply backed up with a chargeable battery, a hard disk, and a first expansion connector (4), and said floppy disk unit (3) has a second expansion connector (6), data transmission between said main body (1) and said floppy disk unit (3) being possible by directly connecting said first expansion connector (4) with said second expansion connector (6).

2. A portable computer as claimed in claim 1, wherein said main body (1) and said floppy disk unit (3) are integrally coupled by hand screw means (11, 12), thereby said first and second expansion connectors (4,6) are directly connected to each other.

3. A portable computer as claimed in claim 1, wherein said main body (1) includes means for determining whether or not said floppy disk unit (3) is connected to said main body (1).

4. A portable computer as claimed in claim 3, wherein said main body (1) is adapted to read data from said hard disk when said means determines that said floppy disk unit (3) is not connected to said main body (1) when a power switch of said main body (1) is turned on.

5. A portable computer comprising a main body (1) having data processing functions, removable floppy disk unit (3), and a removable expansion board unit (2) for expanding functions of said main body (1), said main body (1) being formed of a display panel unit (100) and a base unit (105) on which a key board (102) is disposed, said display panel unit (100) being rotatably connected to said base unit (105) so that said display panel unit (100) covers said key board (102) when said portable computer is not in use, wherein said main body (1) has a power supply backed up with a chargeable battery, hard disk, and a first expansion connector (4), said floppy disk unit (3) has a second expansion connector (6), and said expansion board unit (2) has a third expansion connector (5), data transmission between said main body (1) and said floppy disk unit (3) being possible by directly connecting said first expansion connector (4) with said second expansion connector (6), data transmission between said main body (1) and said expansion board unit (2) being possible by directly connecting said first expansion connector (4) with said third expansion connector (5).

# Fig.1A

MAIN BODY — 1

CPU

SYSTEM CONTROL SECTION

I/O CONTROL SECTION

MEMORY

DISPLAY SECTION

DC

HARD DISK

POWER SUPPLY — AC

EXPANSION CONNECTOR ~ 4

# F I g . 1 B

5

2

```
┌─────────────┐
│ EXPANSION   │
│ CONNECTOR   │
└─────────────┘
```

```
┌─────────────┐        ┌─────────────┐        ┌─────────────┐
│ EXPANSION   │        │ EXPANSION   │        │ EXPANSION   │
│ SLOT        │        │ SLOT        │        │ CONNECTOR   │
└─────────────┘        └─────────────┘        └─────────────┘
       :                      :                      7
┌─────────────┐        ┌─────────────┐
│ EXPANSION   │        │ EXPANSION   │
│ BOARD       │        │ BOARD       │
└─────────────┘        └─────────────┘
```

EXPANSION SLOT UNIT

# F I g . 1 C

6

3

```
┌─────────────┐
│ EXPANSION   │
│ CONNECTOR   │
└─────────────┘
```

```
┌──────────────┐    ┌──────────────┐
│ FLOPPY DISK  │    │ FLOPPY DISK  │
│ INTERFACE    │    │ RECEPTION    │
│              │    │ SECTION      │
└──────────────┘    └──────────────┘
```

FLOPPY DISK UNIT

Fig.2A

# Fig.2B

MAIN BODY

CPU

SYSTEM CONTROL SECTION

I/O CONTROL SECTION

MEMORY

DISPLAY SECTION

DC

HARD DISK

POWER SUPPLY

AC

EXPANSION CONNECTOR

FLOPPY DISK INTERFACE

FLOPPY DISK RECEPTION SECTION

FLOPPY DISK UNIT

9

# F l g. 3

# Fig. 4

# Fig. 5

EP 0 459 427 A2

Fig. 6

# Fig. 7

```
                          ┌─────────────┐
                          │    START    │
                          └─────────────┘
                                 │
                          ┌─────────────┐
                          │  INITIALIZE │───── S1
                          └─────────────┘
                                 │
                             ╱───────╲
                 NO        ╱  EXPANTION ╲       S2
          ┌───────────────  UNIT CONNECTED
          │               ╲      ?     ╱
          │                 ╲───────╱
          │                     │ YES
    ┌──────────────┐      ┌──────────────┐
    │"NO EXTENSION │ S6   │  ACCESS TO   │── S3
    │ UNIT" SET    │      │ FLOPPY DISK  │
    └──────────────┘      └──────────────┘
          │                     │
          │                 ╱───────╲
          │      NO       ╱ RESPONSE ╲    S4
          │◄────────────── ╲    ?    ╱
          │                 ╲───────╱
          │                     │ YES
    ┌──────────────┐      ┌──────────────┐
    │"FLOPPY DISK  │ S7   │ FLOPPY DISK  │ S5
    │ NOT READY"SET│      │  SETTING     │
    └──────────────┘      └──────────────┘
          │                     │
    ┌──────────────┐            │
    │  HARD DISK   │ S8         │
    │  SETTING     │            │
    └──────────────┘            │
          │                     │
          └─────────────────────┤
                                │
                          ┌──────────────┐
                          │   MANUAL     │── S9
                          │   SETUP      │
                          └──────────────┘
                                │
                          ┌──────────────────┐
                          │  START-UP OF     │── S10
                          │ APPLICATION PROG.│
                          └──────────────────┘
                                │
                          ┌──────────────┐
                          │    E N D     │
                          └──────────────┘
```

13

# F I g. 8

EP 0 459 427 A2